# EUROPEAN PATENT APPLICATION

(11) **EP 4 382 903 A1**
(43) Date of publication of application: **12.06.2024**
(21) Application number: 22910468.2
(22) Date of filing: 05.09.2022
(51) Int. Cl.: G01N 27/62, H01J 49/00, H01J 49/04, H01J 49/16

(54) **SAMPLE SUPPORT**

(30) Priority: 22.12.2021 JP 2021208136
(71) Applicant: Hamamatsu Photonics K.K., Hamamatsu-shi, Shizuoka 435-8558 (JP)
(72) Inventor: IKEDA Takamasa, Hamamatsu-shi, Shizuoka 435-8558 (JP); KOTANI Masahiro, Hamamatsu-shi, Shizuoka 435-8558 (JP); OHMURA Takayuki, Hamamatsu-shi, Shizuoka 435-8558 (JP)
(74) Representative: Grünecker Patent- und Rechtsanwälte PartG mbB
(86) International application number: PCT/JP2022/033317
(87) International publication number: WO 2023/119741

(57) **Abstract**

A sample support includes a substrate including a first surface, and a second surface on a side opposite to the first surface, and including a measurement region in which a porous structure for communicating the first surface and the second surface with each other is formed. A calibration portion including a surface flush with the first surface is formed in the substrate. The water absorbability of the calibration portion is lower than the water absorbability of the measurement region.

## Description

### Technical Field

One aspect of the present disclosure relates to a sample support.

### Background Art

In Patent Literature 1, a sample support used for the ionization of a sample such as a biological sample in sample mass analysis is described. The sample support described in Patent Literature 1 includes a substrate including a porous structure formed to communicate a first surface and a second surface facing each other. In such a sample support, for example, in a case where the sample support is disposed on the sample such that the second surface faces the sample, the components of the sample can be moved toward the first surface side from the second surface side of the substrate via the porous structure.

### Citation List

### Patent Literature

Patent Literature 1: International Publication WO 2019/155741

### Summary of Invention

### Technical Problem

In the mass analysis as described above, mass calibration may be performed before the measurement of the sample is started. In the mass calibration, for example, the measurement is implemented by dropping a sample for mass calibration (a calibration sample) onto the substrate, and a mass spectrum is corrected on the basis of the measurement result. However, in a case where the calibration sample is dropped onto the substrate in the sample support as described above, there is a concern that the area where the sample is dropped may be lost because the calibration sample is absorbed by the porous structure. In addition, there is a concern that fewer components remain on the surface side because many of the components of the sample are moved to the back surface side via the porous structure. Accordingly, there is a concern that it is difficult to perform the mass calibration. Such a problem easily occurs in a case where the concentration of the calibration sample is lower than the concentration of the sample for measurement.

An object of one aspect of the present disclosure is to provide a sample support capable of preferably performing mass calibration.

### Solution to Problem

A sample support according to one aspect of the present disclosure is a sample support used for ionization of a sample, the support including a substrate including a first surface, and a second surface on a side opposite to the first surface, and including a measurement region in which a porous structure for communicating the first surface and the second surface with each other is formed, in which a calibration portion including a surface flush with the first surface is formed in the substrate, and water absorbability of the calibration portion is lower than the water absorbability of the measurement region.

In such a sample support, the calibration portion including the surface flush with the first surface is formed in the substrate, and the water absorbability of the calibration portion is lower than the water absorbability of the measurement region. Accordingly, in a case where a calibration sample is disposed on the surface of the calibration portion, the calibration sample is less likely to be absorbed, and a solvent is dried such that the components of the calibration sample are easily precipitated on the surface of the calibration portion. In addition, since the calibration portion is configured to have the water absorbability different from that of the measurement region, it is easier to visually grasp the position of the calibration portion. In addition, by the calibration portion including the surface flush with the first surface of the substrate, it is possible to accurately perform mass calibration. In addition, since the components of the calibration sample are condensed and easily precipitated, it is possible to use the calibration sample with a low concentration. As described above, according to such a sample support, it is possible to preferably perform the mass calibration.

The calibration portion may be formed in the measurement region. In this case, it is possible to make the surface of the calibration portion reliably flush with the first surface. In addition, it is possible to move the calibration portion close to an area where the actual measurement is performed.

The calibration portion may be formed of a material different from a material of the substrate. In this case, it is possible to increase the degree of freedom for selecting the material of the calibration portion. In addition, it is possible to more easily grasp the position of the calibration portion. In addition, since it is possible to increase the degree of freedom for selecting the material of the substrate, it is possible to control the ionization efficiency of the sample.

The calibration portion may be formed of a same material as a material of the substrate. In this case, it is possible to facilitate the formation of the calibration portion and reduce a cost.

The calibration portion may be formed by embedding a member having the water absorbability lower than the water absorbability of the measurement region in the substrate. In this case, it is possible to form the calibration portion with excellent reproducibility, and facilitate the adjustment of the size of the calibration portion.

The porous structure may be formed of a material including glass, and the calibration portion may be formed by melting and then solidifying a part of the porous structure. In this case, it is possible to facilitate the formation of the calibration portion and reduce the cost of the formation of the calibration.

The calibration portion may be formed by filling the porous structure with a filling material. In this case, it is possible to facilitate the formation of the calibration portion and reduce the cost of the formation of the calibration.

A plurality of the calibration portions may be formed in the substrate. In this case, it is possible to perform the mass calibration by disposing a plurality of calibration samples with concentrations different from each other in the plurality of calibration portions, respectively, and for example, perform quantitative measurement.

The calibration portion may be formed of ceramics. In this case, it is possible to form the calibration portion with excellent reproducibility, and facilitate the adjustment of the size of the calibration portion.

The porous structure may be formed of a sintered body of glass beads, porous glass, a fiber porous body, anodically oxidized silicon, an anodically oxidized valve metal, porous ceramic, or a porous metal. In this case, it is possible to preferably configure the porous structure.

The first surface and the surface of the calibration portion may have electrical conductivity. In this case, for example, by irradiating the first surface with an energy line such as laser light, it is possible to ionize the sample by a laser desorption/ionization method for ionizing the components of the sample.

The first surface and the surface of the calibration portion may have electrical insulating properties. In this case, for example, by irradiating the sample with electrically charged minute liquid droplets, it is possible to ionize the sample by a desorption electrospray ionization method for desorbing and ionizing the sample.

### Advantageous Effects of Invention

According to one aspect of the present disclosure, it is possible to provide the sample support capable of preferably performing the mass calibration.

### Brief Description of Drawings

FIG. 1(a) is a plan view of a sample support of an embodiment, and FIG. 1(b) is a sectional view of the sample support taken along line B-B illustrated in FIG. 1(a).
FIGS. 2(a) to 2(c) are sectional views of sample supports of first to third modification examples.
FIG. 3 is a diagram for describing mass calibration using a sample support of a fourth modification example.

### Description of Embodiments

Hereinafter, a preferred embodiment of the present disclosure will be described in detail with reference to the drawings. Note that, in each of the drawings, the same reference numerals will be applied to the same or corresponding constituents, and the repeated description will be omitted.

### [Configuration of Sample Support]

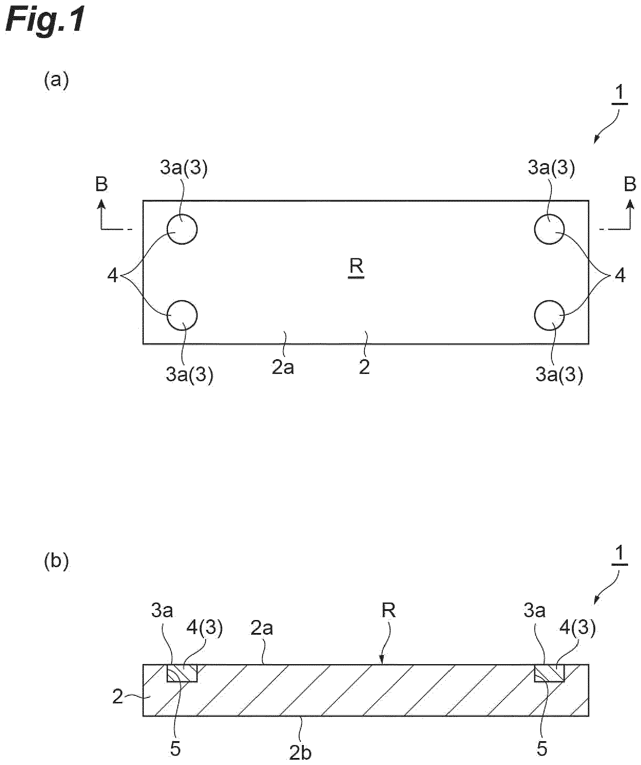

A sample support 1 illustrated in FIG. 1, for example, is used to ionize the components of a sampleto be measured during mass analysis. The sample, for example, is a biological sample or the like. The sample support 1 includes a substrate 2. The substrate 2, for example, is formed of an insulating material in a rectangular plate shape, and has a first surface 2a, and a second surface 2b on a side opposite to the first surface 2a. The first surface 2a and the second surface 2b are the main surface of the substrate 2, and for example, a flat surface perpendicular to a thickness direction of the substrate 2. The length of one side of the substrate 2 when viewed in the thickness direction of the substrate 2, for example, is approximately several cm, and the thickness of the substrate 2, for example, is approximately 1 µm to 1000 µm.

The substrate 2 has a measurement region R used for the measurement of the sample. In this example, the measurement region R is the entire region of the substrate 2. In the measurement region R, a porous structure for communicating the first surface 2a and the second surface 2b with each other is formed. In this example, the porous structure has a structure in which voids (air gaps) (pores) extend in an irregular direction and are irregularly distributed in three dimensions (an irregular porous structure). The voids in the porous structure configure through holes opened to the first surface 2a and the second surface 2b. The irregular porous structure, for example, is a sponge-shaped structure.

In this example, the measurement region R (the substrate 2) is formed of a sintered body of glass beads. The sintered body of the glass beads, for example, has a structure in which a plurality of glass beads are integrated by sintering. The shape of each of the glass beads, for example, is a spherical shape. The shapes and the sizes of the glass beads contained in the substrate 2 may be even, or may be uneven. The porous structure described above is formed of the plurality of glass beads and a plurality of voids formed between the glass beads. The voids between the glass beads are irregularly communicated with each other. The average particle size (diameter) of the glass beads, for example, is approximately 50 µm. In a case where the substrate 2 is formed of the sintered body of the glass beads, the porosity of the porous structure, for example, is 40% to 50%.

In the substrate 2, a plurality of (in this example, four) calibration portions 3 are formed. In this example, each of the calibration portions 3 is formed by embedding an embedment member 4 in the substrate 2. The embedment member 4, for example, is formed of ceramics in a circular plate shape. That is, the embedment member 4 is formed of a material different from the material of the substrate 2. The embedment member 4 is a solid member in which a hole is not formed. A concave portion 5 in a shape corresponding to the embedment member 4 (in a cylindrical shape) is formed in the first surface 2a of the substrate 2, and the embedment member 4 is tightly embedded in the concave portion 5. The embedment member 4, for example, adheres to the bottom surface and the lateral surface of the concave portion 5 by an adhesive material to be fixed. The embedment member 4 is disposed in the concave portion 5 such that the surface of the embedment member on the first surface 2a side is flush with the first surface 2a. Accordingly, the calibration portion 3 has a surface 3a flush with the first surface 2a. Two surfaces being flush with each other indicates that the two surfaces are positioned on the same surface.

In this example, four calibration portions 3 are disposed at four corners of the substrate 2, respectively. As described above, in this example, the entire region of the substrate 2 is the measurement region R used for the measurement of the sample, and each of the calibration portions 3 is disposed in the measurement region R.

The water absorbability of the calibration portion 3 is lower thanthe water absorbability of the measurement region R (the substrate 2). That is, in the calibration portion 3, a liquid is less likely to be absorbed, compared to the measurement region R. In this example, while the measurement region R has the porous structure, the embedment member 4 is formed solid. As a result, the relationship described above is satisfied. That is, the water absorbability of the embedment member 4 is lower than the water absorbability of the measurement region R. In other words, in this embodiment, while the measurement region R is formed as a penetration region including a penetration portion for communicating the first surface 2a and the second surface 2b with each other, the calibration portion 3 is formed as a non-penetration region (non-communication region) not including such a penetration portion. As a result, the relationship described above is satisfied. Note that, in a case where the calibration portion 3 is disposed in the measurement region R, the water absorbability of the measurement region R indicates the water absorbability in a portion of the measurement region R excluding the calibration portion 3.

The first surface 2a of the substrate 2 and the surface 3a of the calibration portion 3 have electrical conductivity. Specifically, a conductive layer is formed on the first surface 2a and the surface 3a. The conductive layer, for example, is continuously (integrally) formed over the first surface 2a and the surface 3a to cover the entire first surface 2a except for an opening portion of the porous structure and the entire surface 3a. The conductive layer, for example, is formed of a metal material such as Pt in a thin film shape. The conductive layer is formed thin to the extent that the calibration portion 3 can be visually observed via the conductive layer.

### [Method for Using Sample Support]

First, an example of a sample ionization method using the sample support 1 will be described. As an example, first, a sample placed on slide glass is prepared, and the sample support 1 is disposed on the sample such that the second surface 2b of the substrate 2 (the measurement region R) is brought into contact with the sample. Accordingly, the components of the sample are moved toward the first surface 2a side from the second surface 2b side through a plurality of paths (the voids in the porous structure) formed in the substrate 2 by a capillary action. The components of the sample moved to the first surface 2a side remain on the first surface 2a side by a surface tension. After that, by scanning (irradiating) the first surface 2a with laser light in a state where a voltage is applied to the conductive layer on the first surface 2a, the components of the sample moved to the first surface 2a side are ionized. The ionization method in this example is a laser desorption/ionization method using laser light (an energy line).

The sample ions discharged from the sample support 1, for example, are detected with an ion detection unit of a mass analysis device. For example, a ground electrode is provided between the sample support 1 and the ion detection unit, and the sample ions are moved toward the ground electrode while being accelerated by a potential difference between the conductive layer and the ground electrode. Then, the sample ions are detected with the ion detection unit, and the mass analysis measurement of the sample is implemented. The ion detection unit detects the sample ions in association with the scanning position of the laser light. The mass analysis device, for example, is a device performing the mass analysis of the sample using time-of-flight mass spectrometry (TOF-MS).

Before such measurement of the sample is started, mass calibration is performed. In the mass calibration, a sample for mass calibration (a calibration sample and a reference sample) is dropped onto the surface 3a of the calibration portion 3, and the ionization and the mass analysis measurement described above are implemented on the calibration sample. A mass spectrum is corrected on the basis of a measurement result for the calibration sample. The mass spectrum is a spectrum obtained by the mass analysis, and for example, represented by a graph in which a horizontal axis is set as an m/z value, and a vertical axis is set as a detected strength. The m/z value is a mass-charge ratio obtained by dividing the mass m of the ions by the charge number z. Since the mass spectrum of the calibration sample is known, it is possible to perform the mass calibration of the mass analysis device, on the basis of the measurement result for the calibration sample. The calibration sample has a concentration lower than that of the sample for measurement. In the sample support 1 of the embodiment, since the solvent of the calibration sample on the surface 3a of the calibration portion 3 is dried such that the components of the calibration sample are condensed and easily precipitated, it is possible to use the dilute calibration sample.

### [Function and Effect]

In the sample support 1, the calibration portion 3 including the surface 3a flush with the first surface 2a is formed in the substrate 2, and the water absorbability of the calibration portion 3 is lower than the water absorbability of the measurement region R. Accordingly, in a case where the calibration sample is disposed on the surface 3a of the calibration portion 3, the calibration sample is less likely to be absorbed, and the solvent is dried such that the components of the calibration sample are easily precipitated on the surface 3a. In addition, since the calibration portion 3 is configured to have the water absorbability different from that of the measurement region R, it is easier to visually grasp the position of the calibration portion 3. In addition, by the calibration portion 3 including the surface 3a flush with the first surface 2a of the substrate 2, it is possible to accurately perform the mass calibration. Since the time-of-flight shift of the ions strongly depends on a depth direction of an occurrence position, but an influence due to a position in the same plane is small, it is important that the surface 3a of the calibration portion 3 is positioned on the same plane as the first surface 2a of the substrate 2. In addition, since the components of the calibration sample are condensed and easily precipitated, it is possible to use the calibration sample with a low concentration. As described above, according to the sample support 1, it is possible to preferably perform the mass calibration.

The calibration portion 3 is formed in the measurement region R. Accordingly, it is possible to make the surface 3a of the calibration portion 3 reliably flush with the first surface 2a. In addition, it is possible to move the calibration portion 3 close to an area where the actual measurement is performed.

The calibration portion 3 is formed by embedding the embedment member 4 having the water absorbability lower than the water absorbability of the measurement region R in the substrate 2. Accordingly, it is possible to form the calibration portion 3 with excellent reproducibility, and facilitate the adjustment of the size of the calibration portion 3. In addition, since it is possible to increase the degree of freedom for selecting the material of the substrate 2, it is possible to control the ionization efficiency of the sample.

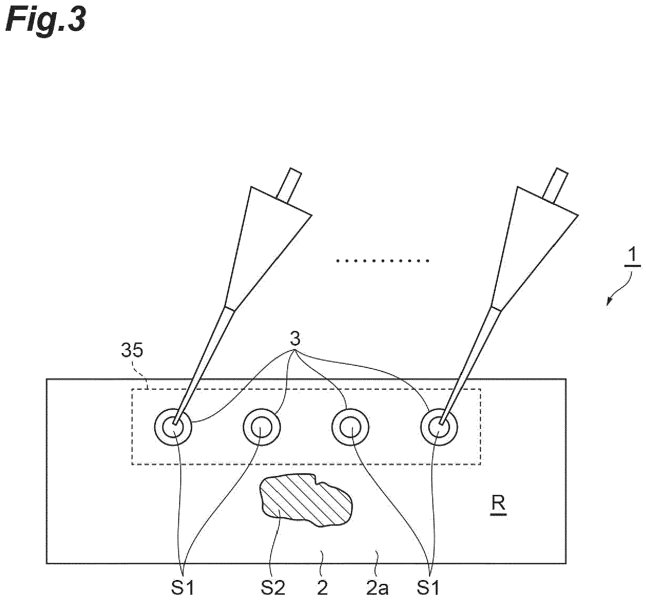

The plurality of calibration portions 3 are formed in the substrate 2. Accordingly, it is possible to perform the mass calibration by disposing a plurality of calibration samples with concentrations different from each other in the plurality of calibration portions 3, respectively, and for example, perform quantitative measurement. The quantitative measurement will be described below with reference to FIG. 3.

The calibration portion 3 is formed of the ceramics. Accordingly, it is possible to form the calibration portion 3 with excellent reproducibility, and facilitate the adjustment of the size of the calibration portion 3.

The porous structure of the measurement region R is formed of the sintered body of the glass beads. Accordingly, it is possible to preferably configure the porous structure.

The first surface 2a and the surface 3a of the calibration portion 3 have electrical conductivity. Accordingly, it is possible to ionize the sample by the laser desorption/ionization method as described above.

### [Modification Examples]

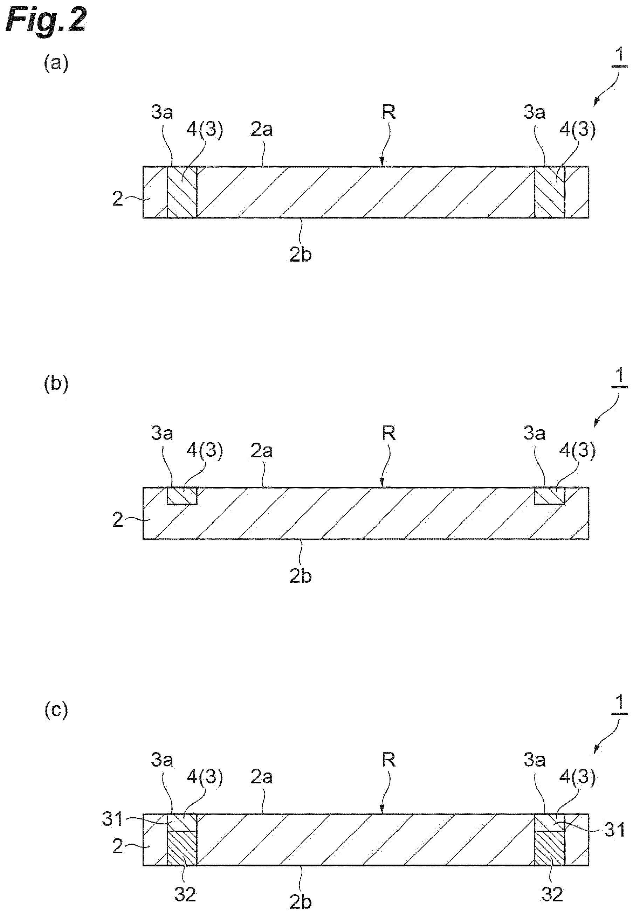

The sample support 1 may be configured as with a first modification example illustrated in FIG. 2(a). In the first modification example, the embedment member 4 is provided to penetrate through the substrate 2 along the thickness direction. According to such the first modification example, as with the embodiment described above, it is also possible to preferably perform the mass calibration.

The sample support 1 may be configured as with a second modification example illustrated in FIG. 2(b). In the second modification example, the substrate 2 and the calibration portion 3 are formed of porous glass. The porous glass is a sponge-shaped glass plate in which a plurality of pores are irregularly formed and linked. In this example, the calibration portion 3 is formed by melting and then solidifying a part of the porous structure in the measurement region R. For example, by preparing the substrate 2 including a portion to be the calibration portion 3 after processing, and melting and then solidifying the porous structure in the portion, it is possible to obtain the substrate 2. In this case, the calibration portion 3 is formed in the measurement region R in the substrate 2. According to such the second modification example, as with the embodiment described above, it is also possible to preferably perform the mass calibration. In addition, it is possible to facilitate the formation of the calibration portion 3 and reduce a cost of the formation of the calibration.

The sample support 1 may be configured as with a third modification example illustrated in FIG. 2(c). In the third modification example, the substrate 2 is formed of porous glass, and the calibration portion 3 includes a first portion 31 consisting of porous glass and a second portion 32 consisting of the embedment member 4. The first portion 31 is configured as with the calibration portion 3 of the second modification example. The second portion 32 is configured as with the calibration portion 3 of the embodiment. The first portion 31 is disposed to be exposed to the first surface 2a of the substrate 2, and the second portion 32 is disposed between the first portion 31 and the second surface 2b of the substrate 2. According to such the third modification example, as with the embodiment described above, it is also possible to preferably perform the mass calibration.

As another modification example, the calibration portion 3 may be formed by filling the porous structure of the measurement region R with a filling material. The filling material, for example, is formed in a powder shape, and filled in the voids of the porous structure. By filling a part of the porous structure with the filling material, it is possible to make the part as the calibration portion 3 having the water absorbability lower than that of the porous structure. According to such a modification example, as with the embodiment described above, it is also possible to preferably perform the mass calibration. In addition, it is possible to facilitate the formation of the calibration portion 3 and reduce the cost of the formation of the calibration.

The sample support 1 may be configured as with a fourth modification example illustrated in FIG. 3. In the fourth modification example, a plurality of calibration portions 3 (in this example, four calibration portions) are disposed in a row in a rectangular region 35. In this example, the plurality of calibration portions 3 are arranged at regular intervals along a direction parallel to the long side of the substrate 2. According to such a fourth modification example, as with the embodiment described above, it is also possible to preferably perform the mass calibration. In addition, by disposing a plurality of calibration samples S1 with concentrations different from each other in the plurality of calibration portions 3 respectively. Therefore, It is possible to perform the mass calibration, and perform the quantitative measurement. For example, first, four calibration samples S1 adjusted so that the concentration changes stepwise are dropped to four calibration portions 3 and measured.. Subsequently, the intensity and the concentration of the ions of the measurement target are plotted on the basis of measurement results for four calibration samples S1 to create a calibration curve. Subsequently, a sample S2 to be measured is analyzed and the concentration is estimated on the basis of the calibration curve. Subsequently, for example, in the case of imaging measurement, a concentration map is created. According to the steps described above, it is possible to perform the quantitative measurement.

The present disclosure is not limited to the embodiment and the modification examples described above. The materials and the shapes of each of the configurations are not limited to the materials and the shapes described above, and various materials and shapes can be adopted. For example, the porous structure of the measurement region R may be formed of a fiber porous body. The fiber porous body has a structure (an aggregate) in which a plurality of linear cellulose nanofibers overlap with each other. The fiber porous body, for example, may include a structure in which a plurality of carbon nanofibers, a plurality of fibrous porous silicas, a plurality of glass fibers, or combinations thereof overlap with each other.

The porous structure of the measurement region R may be formed of anodically oxidized silicon or an anodically oxidized valve metal. In this case, the porous structure has a plurality of through holes formed to communicate the first surface 2a and the second surface 2b of the substrate 2 with each other. Such through holes, for example, are a plurality of pores extending along the thickness direction of the substrate 2. In this case, the porous structure has a structure in which the plurality of pores are regularly disposed (a regular porous structure).

A case where the porous structure is formed of the anodically oxidized valve metal (for example, aluminum (Al)) will be further described. The porous structure, for example, may be an Al alumina porous film. Specifically, such a porous structure can be obtained by performing an anodization treatment with respect to an Al substrate, and peeling off the oxidized surface portion from the Al substrate. Note that, the porous structure may be formed by anodically oxidizing a valve metal other than Al, such as tantalum (Ta), niobium (Nb), titanium (Ti), hafnium (Hf), zirconium (Zr), zinc (Zn), tungsten (W), bismuth (Bi), and antimony (Sb).

The porous structure of the measurement region R may be formed of porous ceramic or a porous metal. The structure of the porous ceramic is in a sponge shape in which a plurality of pores are irregularly formed and linked, as with the porous glass. The porous metal is a sponge-shaped metal perforated body (may be referred to as a metal porous body, a foam metal, a porous metal, a perforated metal, or the like) in which a plurality of pores are irregularly formed and linked.

The conductive layer may not be formed on the first surface 2a of the substrate 2 and the surface 3a of the calibration portion 3.The first surface 2a and the surface 3a may have electrical insulating properties. In this case, as with the embodiment described above, it is also possible to preferably perform the mass calibration. For example, the sample can be ionized by a desorption electrospray ionization method in which the sample is desorbed and ionized by irradiating the sample with electrically charged minute liquid droplets.

In the embodiment described above, the entire region of the substrate 2 is the measurement region R, but only a part of the substrate 2 may configure the measurement region R. In this case, a portion of the substrate 2 except for the measurement region R may not include the porous structure. The calibration portion 3 may be formed in the portion of the substrate 2 except for the measurement region R. The shape of the calibration portion 3 is not limited to a circular shape, and may be any shape such as a square shape, a rectangular shape, and an elliptical shape. The surface 3a of the calibration portion 3 may be subjected to a hydrophilic treatment to have hydrophilicity higher than that of the first surface 2a of the substrate 2. In this case, it is possible to suppress the infiltration of the calibration sample dropped onto the surface 3a into the first surface 2a. A groove may be formed in the boundary portion between the surface 3a and the first surface 2a by half-etching. In this case, the surface 3a is easily distinguished from the first surface 2a to be visually recognized. In addition, it is possible to suppress the infiltration of the calibration sample dropped onto the surface 3a into the first surface 2a.

In the embodiment described above, the embedment member 4 may be formed of a material other than the ceramics, for example, a metal material or an organic material. It may not be necessary to form the plurality of calibration portions 3, and only one calibration portion 3 may be formed. In the example of the method for using the sample support 1 described above, the sample is supplied from the second surface 2b side of the substrate 2, but the sample may be supplied from the first surface 2a side. For example, the sample may be supplied onto the first surface 2a by placing the sample on the first surface 2a such that the components of the sample are infiltrated into the substrate 2, and then, removing the sample.

### Reference Signs List

1: sample support, 2: substrate, 2a: first surface, 2b: second surface, 3: calibration portion, 3a: surface, R: measurement region.

## Claims

1. A sample support used for ionization of a sample, the support comprising:
a substrate including a first surface, and a second surface on a side opposite to the first surface, and including a measurement region in which a porous structure for communicating the first surface and the second surface with each other is formed;
wherein a calibration portion including a surface flush with the first surface is formed in the substrate; and
water absorbability of the calibration portion is lower than the water absorbability of the measurement region.

2. The sample support according to claim 1,
wherein the calibration portion is formed in the measurement region.

3. The sample support according to claim 1 or 2,
wherein the calibration portion is formed of a material different from a material of the substrate.

4. The sample support according to claim 1 or 2,
wherein the calibration portion is formed of a same material as a material of the substrate.

5. The sample support according to any one of claims 1 to 4,
wherein the calibration portion is formed by embedding a member having water absorbability lower than the water absorbability of the measurement region in the substrate.

6. The sample support according to any one of claims 1, 2, and 4,
wherein the porous structure is formed of a material including glass; and
the calibration portion is formed by melting and then solidifying a part of the porous structure.

7. The sample support according to any one of claims 1 to 4,
wherein the calibration portion is formed by filling the porous structure with a filling material.

8. The sample support according to any one of claims 1 to 7,
wherein a plurality of the calibration portions are formed in the substrate.

9. The sample support according to any one of claims 1 to 8,
wherein the calibration portion is formed of ceramics.

10. The sample support according to any one of claims 1 to 8,
wherein the porous structure is formed of a sintered body of glass beads, porous glass, a fiber porous body, anodically oxidized silicon, an anodically oxidized valve metal, porous ceramic, or a porous metal.

11. The sample support according to any one of claims 1 to 10,
wherein the first surface and the surface of the calibration portion have electrical conductivity.

12. The sample support according to any one of claims 1 to 10,
wherein the first surface and the surface of the calibration portion have electrical insulating properties.
